# EUROPÄISCHE PATENTSCHRIFT

(11) **EP 2 035 901 B1**
(45) Veröffentlichungstag und Bekanntmachung des Hinweises auf die Patenterteilung: **06.06.2012**
(21) Anmeldenummer: 07764725.3
(22) Anmeldetag: 20.06.2007
(51) Int. Cl.: G05B 19/042

(54) **AUSTAUSCHBARES ANTRIEBSSYSTEM**
REPLACEABLE DRIVE SYSTEM
Système d'entraînement interchangeable

(30) Priorität: 23.06.2006 DE 102006028797
(43) Veröffentlichungstag der Anmeldung: 18.03.2009
(73) Patentinhaber: KHS GmbH, 44143 Dortmund (DE)
(72) Erfinder: KRÄMER, Klaus, 44267 Dortmund (DE); SCHLÜTER, Winfried, 48612 Horstmar (DE)
(86) Internationale Anmeldenummer: PCT/EP2007/005401
(87) Internationale Veröffentlichungsnummer: WO 2007/147567

(56) Entgegenhaltungen:
- EP-A- 1 001 322
- EP-A1- 1 174 345
- WO-A2-2006/000167
- DE-A1- 10 034 907
- DE-A1- 10 353 052
- DE-A1- 10 358 270
- DE-A1-102004 011 457
- US-A1- 2004 215 370

## Beschreibung

Die Erfindung betrifft eine Vorrichtung zum Behandeln von Flaschen, Dosen oder dergleichen Behälter.

Es ist bekannt, bei Vorrichtungen oder Maschinen zum Behandeln von Flaschen, Dosen oder dergleichen Behälter, wie sie beispielsweise in der DE 190 43 907 A1 beschrieben sind, vorhandene Antriebssysteme auswechselbar auszugestalten. Bei derartigen Maschinen ist ein horizontal angeordneter Rotor vorhanden, der an seinem Umfang eine Vielzahl von tellerartigen Behälterträgern aufweist, die die Flaschen, Dosen oder dgl. tragen. Die Behälter werden an einem Punkt des Rotorumfanges auf die Behälterträger aufgesetzt und durch geeignete Mittel auf den Trägern fixiert, so dass sie bei einer Drehung des Behälterträgers mit diesem mitdrehen. Bei einer Umdrehung des Rotors werden die Behälter an einer Mehrzahl von Bearbeitungsstationen entlanggeführt, die beispielsweise die Behälter mit Etiketten oder Aufdrucken versehen, je nach Ausgestaltung der Maschine.

Zur Drehung der Behälterträger und den darauf befindlichen Behältern ist ein Stellantrieb vorgesehen. Zur genauen Ausrichtung des Behälters an den jeweils passierten Bearbeitungsstationen sind zudem Sensoren, unter anderem zur Winkelmessung, und eine Steuerelektronik vorgesehen, die für eine exakte Ausrichtung und geführten Drehung des Behälters an den Bearbeitungsstationen sorgt. Bekannt ist, den Stellantrieb mit einer Steuerelektronik, Sensoren und gegebenenfalls noch weiteren Bauteilen zu einer kompakten modularen Baueinheit als Antriebssystem auszubilden, die austauschbar am Rotor angebracht ist.

Die Maschine besitzt eine übergeordnete Maschinensteuerung, die die Behandlung der Behälter beim Durchlauf durch die Maschine steuert. Zur Übertragung von Steuerbefehlen an die einzelnen Maschinenkomponenten können unterschiedliche Verbindungswege vorhanden sein, beispielsweise ein Bussystem oder dergleichen.

Die modularen Antriebseinheiten weisen eine elektronische Steuereinrichtung auf, die die für das Funktionieren des Antriebs nötigen Steuerungsprogramme, beispielsweise zur Auswertung der Sensorinformationen und präzisen Ansteuerung einer vorgegebenen Winkelposition, enthält.

Die modulare Ausgestaltung des Antriebssystems ermöglicht es, bei Reparaturen schnell einen Austausch eines defekten Antriebs an der Maschine vorzunehmen. Es müssen keine aufwendigen Ein- und Ausbau-Arbeiten vorgenommen werden, da das komplette Modul als Ganzes ausgewechselt werden kann. Dabei tritt allerdings das Problem auf, dass die Klasse der beschriebenen Maschinen sehr groß und der Aufbau der Maschinen demzufolge sehr unterschiedlich ist. Aus diesem Grund müssen je nach Art der Maschine die Stellantriebe unterschiedliche Anforderungen erfüllen, was unter anderem dadurch erreicht wird, dass unterschiedliche Steuerungsprogramme für die Antriebssysteme unterschiedlicher Maschinen verwendet werden. Im Falle eines Austausches tritt dann das Problem auf, dass darauf geachtet werden muss, dass die, innerhalb des Antriebssystems verwendete Programmversion für die entsprechende Maschine geeignet ist, was entsprechend dem Stand der Technik dazu führt, dass eine Vielzahl von Antriebssystemen vorrätig gehalten werden müssen, um auf Störungen in unterschiedlichen Maschinentypen, wie beschrieben, reagieren zu können.

Bei einer gattungsgemäßen Vorrichtung entsprechend der EP 1 001 322 A1 geht es um die Aufbereitung für den medizinischen oder pharmazeutischen Bereich. In diesem Zusammenhang ist eine Schnittstelleneinrichtung zur Erschaffung einer Datenverbindung zwischen einer Steuereinrichtung und wenigstens einer von der Steuereinrichtung separaten Datenverarbeitungseinrichtung realisiert. Außerdem ist ein Datenträger vorgesehen, auf welchem ein gerätespezifischer Kennungs-, Konfigurations- oder Programmdatensatz gespeichert ist. Dieser lässt sich von der Datenverarbeitungseinrichtung lesen.

Darüber hinaus beschreibt die DE 103 53 052 A1 eine Automatisierungsanlage mit untereinander kommunizierenden Komponenten, die jeweils durch ein ihnen zugeordnetes Programm gesteuert sind. Außerdem ist ein mit den Komponenten kommunizierendes zentrales Verwaltungssystem vorgesehen. In dem Verwaltungssystem sind die Zuordnungen von Komponenten und Programmen gespeichert.

Der Erfindung liegt das technische Problem zugrunde, eine derartige Vorrichtung so weiter zu entwickeln, dass eine Vielzahl von unterschiedlichen Maschinen ohne manuelle Anpassung verwendet werden kann.

Zur Lösung dieser Aufgabe wird eine Vorrichtung mit den Merkmalen des Patentanspruchs 1 vorgeschlagen.

Das Antriebssystem weist eine Konfiguration auf, die in einer Vielzahl von Behandlungsmaschinen verwendet werden kann. Durch die wiederbeschreibbare Ausgestaltung der Speichereinrichtung für das Steuerungsprogramm, bzw. die Firmware, kann die jeweils zur Maschine passende Version in die Speichereinrichtungen des Antriebssystems übertragen werden. Im Gegensatz zum herkömmlichen System, bei dem dies mittels extra eingerichteter Hardware oder dem Austausch der Speichereinrichtung selbst erfolgen musste, kann mit der vorliegenden Erfindung die Übertragung unmittelbar von der übergeordneten Maschineneinrichtung in die Speichereinrichtung erfolgen.

Nach vollendetem Aufbau oder Austausch des Antriebssystems in der Maschine wird über die vorhandene Kommunikationsschnittstelle eine Verbindung zwischen dem Speicherelement bzw. der elektronischen Steuer- und/oder Regel- und/oder Überwachungseinrichtung des Antriebssystems mit der übergeordneten Maschinensteuerung hergestellt. Diese kann dann im Anschluss genau für diese Maschine passende Steuerungsprogramme in die Speichereinrichtung übertragen.

Auf diese Weise ist es möglich, dass nicht für jeden Maschinentyp spezifische, nicht untereinander austauschbare Antriebssysteme vorrätig gehalten werden müssen, sondern ein einheitliches Antriebssystem vorhanden ist, das einfach nach dem Einbau in eine Maschine mit den nötigen Steuerungsprogrammen versehen wird und dann voll funktionstüchtig auf dieser Maschine zum Einsatz kommt.

Dabei kann das Steuerungsprogramm in der Maschinensteuerung selbst oder in externen der Maschinensteuerung zugänglichen Speichereinheiten abgelegt sein. Bekannte Steuerungen weisen häufig integrierte flexibel einsetzbare Speichereinrichtungen auf, die zu diesem Zweck genutzt werden können.

Die Maschinensteuerung ist deshalb beispielsweise als SPS, PC oder Mikrocontroller ausgebildet.

Dabei ist das Steuerungsprogramm zweckmäßigerweise in dem für das Antriebssystem verwendeten Datenformat, also beispielsweise in Form eines Binär-Files gespeichert, so dass es einfach unmittelbar in die Speichereinrichtung des Antriebssystems übertragen werden kann und keine aufwendigen Konvertierungsschritte durchlaufen werden müssen.

Zur Unterscheidung der unterschiedlichen Steuerungsprogramme können diese ein Versions-Identifikationselement aufweisen, das von der Maschinensteuerung ausgelesen werden kann. Auf diese Weise ist es einfach möglich, die unterschiedlichen Versionen von Steuerungsprogrammen voneinander zu unterscheiden, um festzustellen, welches Programm für die aktuelle Maschine benötigt wird. Die Maschinensteuerung kann dann in der Folge das ausgelesene Versions-Identifikationselement des neu eingesetzten Antriebes mit dem in seiner Speichereinrichtung vorhandenen vergleichen und feststellen, ob ein Austausch des gespeicherten Programms nötig ist. Sollte dies der Fall sein, überträgt die Maschinensteuerung das gespeicherte Steuerungsprogramm an das Antriebssystem und überschreibt beispielsweise das in der Speichereinrichtung bereits vorhandene Programm, so dass es in der Folge das richtige passende Programm beinhaltet.

Dies kann entweder automatisch oder manuell erfolgen, wobei zweckmäßigerweise nach einem Austausch des Antriebssystems die Überprüfung vorgenommen wird. Der dann gegebenenfalls nötige Austausch kann ebenfalls automatisch oder nach Bestätigung, beispielsweise durch einen Bediener, erfolgen.

Diese und weitere Ausgestaltungen der Erfindung ergeben sich aus den Unteransprüchen.

Die Erfindung wird im Folgenden anhand der Zeichnungen näher erläutert. Diese zeigen in
- **Fig.** 1: eine schematische Draufsicht auf eine erfindungsgemäße Bearbeitungsmaschine und in
- **Fig. 2**: eine teilweise geschnittene schematische Ansicht eines erfindungsgemäßen Antriebssystems.

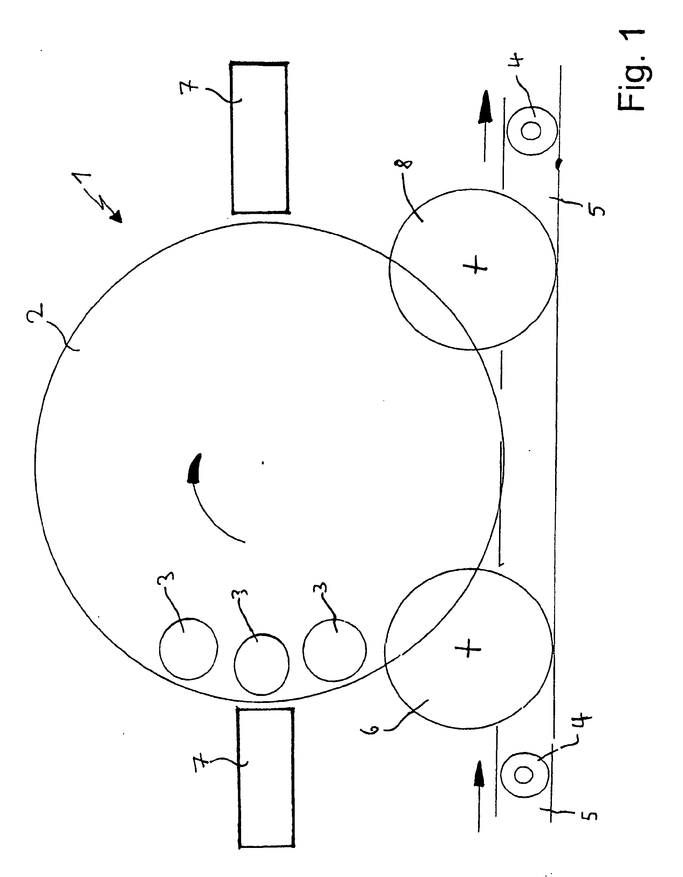

Eine allgemein mit 1 bezeichnete erfindungsgemäße Bearbeitungsmaschine ist in Fig. 1 schematisch dargestellt. Sie weist einen kreisförmigen Rotor 2 auf, der um eine Vertikalachse drehbar gelagert ist und von einem nicht näher dargestellten Antriebssystem gedreht wird. Auf dem Rotor befinden sich eine Vielzahl von Behälterträgern 3, die mit dem Rotor umlaufen und in sich um ihre Mittelachse drehbar sind.

Behälter 4, wie beispielsweise Flaschen, werden von einem Fördermechanismus 5 an der Maschine angeliefert und von einem Transportstern 6 auf die Behälterträger 3 gesetzt, wo sie von einer nicht näher dargestellten Befestigungseinrichtung von oben auf den Behälterträger 3 gedrückt werden.

Durch den sich drehenden Rotor 2 werden die Behälter dann an Bearbeitungsstationen 7 vorbeigeführt, die die Behälter beispielsweise vorder- und rückseitig mit Etiketten versehen. Dazu wird durch Drehung des Behälterträgers 3 einerseits die exakte Positionierung der Etiketten auf der Vorder- bzw. Rückseite gewährleistet und durch eine entsprechende Drehung des Behälters 4 im Vorbeiführen ein sauberes Aufbringen der Etiketten gewährleistet. Nachdem die Behälter an allen Behandlungsstationen vorbeigeführt worden sind, werden sie von einem weiteren Transportstern 8 nach Lösen des Befestigungsmechanismus von den Behälterträgern 3 abgenommen und auf den Transportmechanismus 5 gesetzt, von dem sie in der Folge abtransportiert werden.

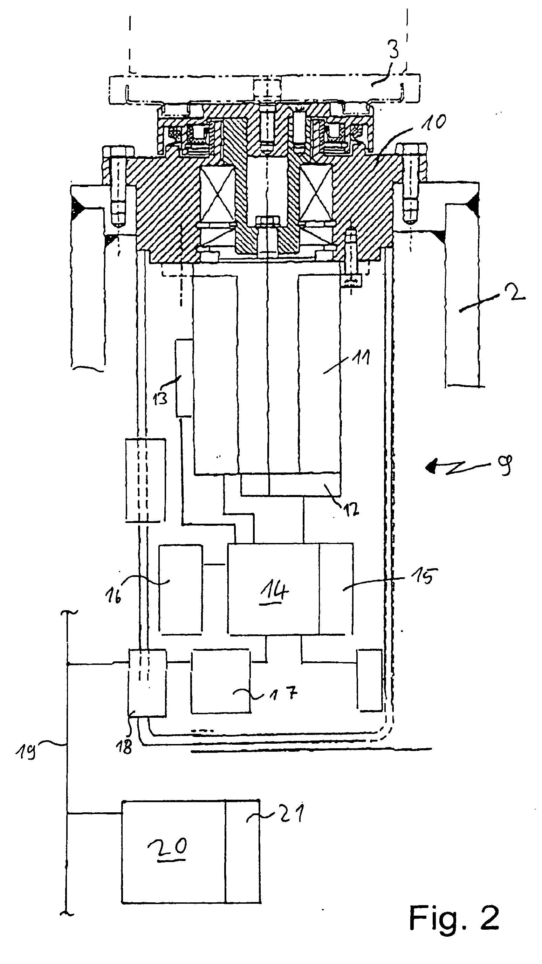

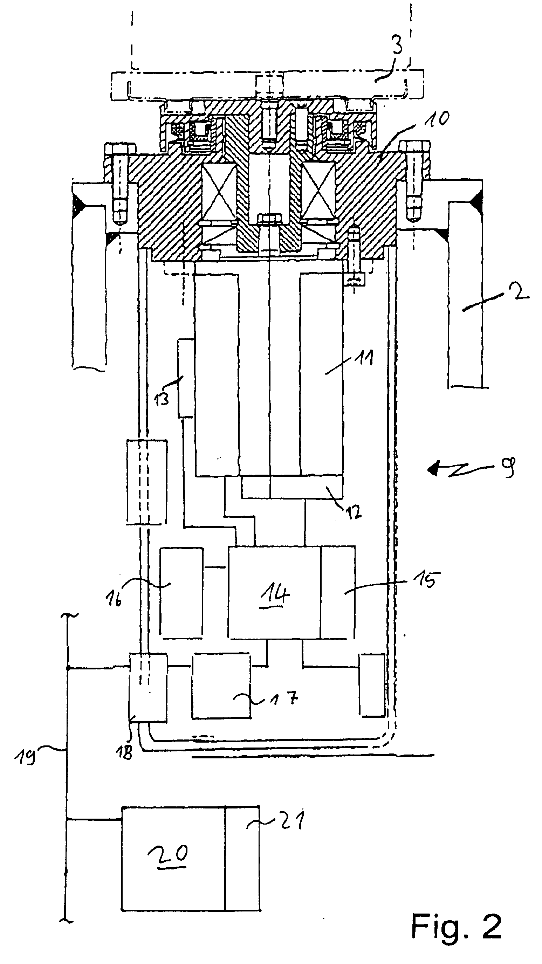

Zur genauen Positionierung der Behälterträger 3 ist ein Antriebssystem vorgesehen, dass allgemein mit 9 bezeichnet und in Fig. 2 näher dargestellt ist. Das Antriebssystem 9 ist als Kompaktmodul aufgebaut und wird mit seiner Deckelplatte 10 in entsprechende Aussparungen im Rotor 2 eingesetzt und dort befestigt. Es trägt auf seiner Oberseite jeweils einen Behälterträger 3.

Zur genauen Verdrehung des Behälterträgers 3 ist im Inneren ein elektromotorischer Servoantrieb 11 vorgesehen, dessen Drehachse direkt oder, in Ausgestaltung, über ein Getriebe mit der Drehachse des Behälterträgers 3 verbunden ist.

Zur Bestimmung der aktuellen Winkellage des Servoantriebes 11 und somit des Behälterträgers 3 ist ein Drehwinkelsensor 12 am Servoantrieb 11 vorgesehen. Ein weiterer Sensor 13 ist zur Überwachung weiterer Betriebsparameter und zur Detektion von Störungen vorgesehen.

Die Sensoren 12 und 13 sind mit einer bzw. Steuereinheit 14 verbunden. Diese weist eine interne Speichereinheit 15 zur Aufnahme laufender Betriebsparameter und eine weitere Speichereinrichtung 16 zur Aufnahme eines Steuerungsprogramms auf.

Die Steuereinheit 14 ist mittels einer Kommunikationsschnittstelle 17 über eine Steckverbindung 18 mit einem externen Bussystem 19 verbunden.

Das Bussystem 19 steht außer mit den erfindungsgemäßen Antriebssystemen 9 auch mit einer übergeordneten Maschinensteuerung 20 in Verbindung. Diese überacht die Funktion der Maschine 1 mittels einer Anzahl nicht näher dargestellter Sensoren und leitet Steuerbefehle an die diversen Maschinenkomponenten weiter. Unter anderem leitet sie entsprechende Steuerbefehle, die die aktuell notwendige Positionierung eines Behälterträgers 3 betreffen, an die Antriebssysteme 9 weiter.

Diese Steuerbefehle, die über das Bussystem 19 und die Kommunikationsschnittstelle 17 an die Steuereinrichtung 14 übertragen werden, werden dort ausgewertet und anhand der durch den Sensor 12 bekannten aktuellen Position des Behälterträgers 3 werden entsprechende Steuerimpulse zur nötigen Verdrehung des Servomotors 11 generiert und an diesen übertragen. Zusätzlich können auf die beschriebene Art und Weise Rückmeldungen über die aktuelle Position des Behälterträgers 3 von der Steuerung 14 an die Maschinensteuerung 20 übertragen werden.

Die Maschinensteuerung 20 weist außerdem einen Speicherbereich 21 auf, in dem nötige Steuerungsprogramme für die einzelnen Komponenten der Maschine abgelegt sind. Außerdem kann die Maschinensteuerung 20 über das Bussystem 19 von den einzelnen Steuerungseinheiten 14 abfragen, welches Versions-Identifikationselement die in ihren Speichereinrichtungen 16 abgelegten Steuerungsprogramme aufweisen. Außerdem kann die Maschinensteuerung 20 diese Identifikationselemente mit Identifikationselementen der in ihrem Speicher 21 abgelegten Steuerprogramme vergleichen. Außerdem ist es möglich, die im Speicher 21 abgelegten Steuerungsprogramme über die Kommunikationsschnittstelle 17 an ausgewählte Steuereinheiten 14 zu übertragen und so die dort im Speicher 16 abgelegten Steuerungsprogramme zu überschreiben.

Im Falle eines Defektes in irgendeinem Teil eines Antriebssystems 9 wird dieser Defekt von der Steuereinheit 14 erkannt und über die Kommunikationsverbindungen 17 an die Maschinensteuerung 20 übermittelt. Unabhängig von der Schwere des Defektes löst diese daraufhin einen Alarm aus und bringt die Maschine zum Stillstand. Außerdem zeigt sie entsprechende Meldungen an und identifiziert das entsprechende Antriebssystem.

In der Folge kann dieses Antriebssystem 9 durch ein funktionsfähiges ersetzt werden, indem die komplette Einheit vom Rotor 2 gelöst und die neue funktionsfähige Einheit wieder eingesetzt und befestigt wird. In der Folge müssen nur noch die elektrischen und die Kommunikationsverbindungen wieder hergestellt werden und die Maschine ist grundsätzlich wieder einsatzbereit.

Die Maschinensteuerung 20 fragt nach vollzogenem Einbau das Versions-Identifikationselement der in der Speichereinheit 16 der neu eingesetzten Steuereinheit 14 gespeicherten Steuerungsprogramms ab und vergleicht dieses Identifikationselement mit demjenigen des Steuerungsprogramms, das in Ihrem Speicher 21 abgelegt ist und für die korrekte Funktion der Maschine benötigt wird. Stimmen beide Indentifikationselemente überein, werden entsprechende Meldungen generiert und die Maschine 1 wieder in Betrieb genommen.

Stimmen die Versions-Identifikationselemente nicht überein, übermittelt die Maschinensteuerung 20 eine Kopie des in ihrem Speicher 21 befindlichen, passenden Steuerungsprogramms über das Bussystem 19 und die Kommunikationsverbindung 17 an die Steuereinheit 14, die damit das bereits in ihrer Speichereinrichtung 16 befindliche Steuerungsprogramm überschreibt. Nach Abschluss des Übertragungsvorganges und ggf. einer Überprüfung, ob die Übertragung erfolgreich war, befindet sich nun auch das korrekte Steuerungsprogramm in dem ausgetauschten Antriebssystem 9, so dass in der Folge wie oben beschrieben, von der Maschinensteuerung eine Wiederinbetriebnahme der Maschine 1 initiiert wird.

Vorstehend wurde in der Beschreibung des Ausführungsbeispieles ausschließlich von Steuerungssoftware gesprochen. Im Rahmen der vorliegenden Anmeldung ist unter dem Begriff Steuerungssoftware jegliche zum Betrieb der Antriebssysteme erforderliche Software zu verstehen, wobei es im Rahmen der Erfindung nicht zwingend erforderlich ist, dass diese Software vollständig durch die Maschinensteuerung 20 in die Speichereinrichtung 16 des Antriebssystems übertragen wird. Es können beispielsweise auch bereits Teile der notwendigen Software innerhalb des Antriebssystems vorhanden sein.
Im Rahmen der vorliegenden Anmeldung sind unter dem Begriff Steuerungssoftware sowohl Softwarekomponenten zu verstehen, welche gemeinhin als Betriebssystem bekannt sind, als auch Softwarekomponenten, welche gemeinhin als Anwendungssoftware bekannt sind.

Dabei werden unter "Betriebssystem" Programme oder Daten verstanden, welche der übergeordneten Software, beispielsweise der Steuerungssoftware die zum Betrieb der innerhalb der Antriebssysteme enthaltenen Bauteile (Hardwarekomponenten) notwendige Informationen und Steuerungsbefehle zur Verfügung stellen. Unter "Anwendungssoftware" ist im dargestellten Ausführungsbeispiel beispielsweise das Drehprogramm, also die Anweisung, wie die Behälter während eines Umlaufs des Rotors zu drehen sind zu verstehen.

Natürlich ist die Erfindung nicht auf das vorstehende Ausführungsbeispiel beschränkt, sondern kann in vielfältiger Hinsicht abgewandelt werden, ohne den Grundgedanken zu verlassen.

So ist es nicht notwendig, das Antriebssystem nur zum Antrieb tellerförmiger Behälterträger einzusetzen. Vielmehr können eine Vielzahl von Antriebssystemen, die in Behandlungsmaschinen zur Anwendung kommen, als modulare Einheiten aufgebaut sein und durch Verwendung entsprechend angepasster Steuerprogramme auf den jeweiligen Anwendungszweck angepasst werden. Auch bei derartigen Systemen findet die Erfindung selbstverständlich Anwendung.

Auch weitere Abwandlungen der Erfindung, wie die Verwendung externer Speicher statt integrierter Speichereinheiten, sternförmige Kommunikationssysteme statt der Verwendung von Bussystemen, einer Vielzahl von möglichen Antrieben sei hier nur beispielsweise als der Abwandlung zugänglich aufgezählt.

### Bezugszeichenliste

- 1: Bearbeitungsmaschine
- 2: Rotor
- 3: Behälterträger
- 4: Behälter
- 5: Fördermechanismus
- 6: Transportstern
- 7: Bearbeitungsstation
- 8: Transportstern
- 9: Antriebssystem
- 10: Deckelplatte
- 11: Servoantrieb
- 12: Drehwinkelsensor
- 13: Sensor
- 14: Steuereinheit
- 15: Speichereinheit
- 16: Speichereinrichtung
- 17: Kommunikationsschnittstelle
- 18: Steckverbindung
- 19: Bussystem
- 20: Maschinensteuerung
- 21: Speicher

## Patentansprüche

1. Vorrichtung zum Behandeln von Flaschen, Dosen oder dergleichen Behälter, mit wenigstens einem auswechselbar ausgebildeten Antriebssystem (9), wobei
- das Antriebssystem (9) wenigstens ein Antriebselement, eine elektronische Steuer- und/oder Regel- und/oder Überwachungseinrichtung (14) sowie eine wiederbeschreibbar ausgebildete Speichereinrichtung (16) zur Aufnahme eines Steuerungsprogramms für die elektronische Steuer-und/oder Regel- und/oder Überwachungseinrichtung (14) aufweist,
- eine übergeordnete Maschinensteuerung (20) vorgesehen ist,
- am Antriebssystem (9) und der Maschinensteuerung (20) jeweils korrespondierende Kommunikationsschnittstellen (17) vorgesehen sind,
- die elektronische Steuer- und/oder Regel- und/oder Überwachungseinrichtung (14) mittels der Kommunikationsschnittstelle (17) über eine Steckverbindung (18) mit einem externen Bussystem (19) verbunden ist und das Bussystem (19) auβer mit dem Antriebssystemen (9) auch mit der übergeordneten Maschinensteuerung (20) in Verbindung steht,
- die Speichereinrichtung (16) derart eingerichtet ist, dass das Steuerungsprogramm mittels der Kommunikationsschnittstellen (17) von der Maschinensteuerung (20) in die Speichereinrichtung (16) übertragbar ist, **dadurch gekennzeichnet, dass**
- die Maschinensteuerung (20) nach vollzogenem Einbau des Antriebssystems (9) ein Versions-Identifikationselement des in der Speichereinheit (16) der neu eingesetzten Steuereinheit (14) gespeicherten Steuerprogramms abfragt und
- dieses Versions-Identifikationselement mit demjenigen des Steuerprogramms vergleicht, welches in ihrem Speicher (21) abgelegt ist und für die korrekte Funktion der Maschine benötigt wird, wobei ferner
- die Maschinensteuerung (20) im Fall, dass das ausgelesene Versions-Identifikationselement des in der Speichereinrichtung (16) des neu eingesetzten Antriebssystems (9) gespeicherten Steuerungsprogramms nicht mit dem Versions-Identifikationselement des in der Maschinensteuerung (20) gespeicherten Steuerungsprogramms übereinstimmt, das in der Maschinensteuerung (20) gespeicherte Steuerungsprogramm mittels der Kommunikationsschnittstellen (17) in die Speichereinrichtung (16) des Antriebssystems (9) automatisch überträgt oder
- die Maschinensteuerung (20) derartig eingerichtet ist, dass die Übertragung des in der Maschinensteuerung (20) gespeicherten Steuerungsprogramms in die Speichereinrichtung (16) des neu eingesetzten Antriebssystems (9) nach einer Auswechslung des Antriebssystems (9) automatisch erfolgt.

2. Vorrichtung (1) nach Anspruch 1, **dadurch gekennzeichnet, dass** das Steuerungsprogramm in der Maschinensteuerung (20) in einem für die elektronischen Steuer- und/oder Regel- und/oder Überwachungseinrichtung des Antriebssystems (14) geeigneten Datenformat gespeichert hat.

3. Vorrichtung (1) nach Anspruch 1 oder 2, **dadurch gekennzeichnet, dass** die Übertragung des Steuerungsprogramms einmalig vor Inbetriebnahme des Antriebssystems (9) erfolgt.

4. Vorrichtung (1) nach einem der Ansprüche 1 bis 3, **dadurch gekennzeichnet, dass** im Falle eines Defekts in irgendeinem Teil eines Antriebssystems (9) dieser Defekt von der elektronischen Steuer- und/oder Regel- und/oder Überwachungseinrichtung (14) erkannt sowie über die Kommunikationsschnittstellen (17) an die Maschinensteuerung (20) übermittelt wird, welche daraufhin eine korrespondierende Meldung anzeigt und das entsprechende Antriebssystem (9) identifiziert.

5. Vorrichtung (1) nach einem der Ansprüche 1 bis 4, **dadurch gekennzeichnet, dass** ein mit der elektronischen Steuer- und/oder Regel- und/oder Überwachungseinrichtung (14) verbundener Sensor (13) zur Überwachung von Betriebsparametern und zur Detektion von Störungen des Antriebssystems (9) vorgesehen ist.

## Claims

1. Apparatus for treating bottles, tins or similar containers, with at least one drive system (9) that is designed to be replaceable, wherein
- the drive system (9) has at least one drive element, an electronic control and/or regulating and/or monitoring device (14) and a storage device (16) designed to be rewritable for recording a control program for the electronic control and/or regulating and/or monitoring device (14),
- a superordinate machine controller (20) is provided,
- in each case corresponding communication interfaces (17) are provided on the drive system (9) and the machine controller (20),
- the electronic control and/or regulating and/or monitoring device (14) is connected with an external bus system (19) by means of the communication interface (17) via a plug connection (18) and the bus system (19) is linked not only with the drive system (9) but also with the superordinate machine controller (20),
- the storage device (16) is set up in such a way that the control program can be transferred from the machine controller (20) into the storage device (16) by means of the communication interfaces (17),
**characterised in that**,
- following installation of the drive system (9), the machine controller (20) interrogates a version identification element of the control program saved in the storage device (16) of the newly inserted control device (14) and
- compares this version identification element with that of the control program which is deposited in its memory (21) and is needed for the correct functioning of the machine, wherein also
- the machine controller (20), in case the read-out version identification element of the control program saved in the storage device (16) of the newly inserted drive system (9) does not match the version identification element of the control program saved in the machine controller (20), automatically transfers the control program saved in the machine controller (20) by means of the communication interfaces (17) into the storage device (16) of the drive system (9) or
- the machine controller (20) is set up in such a way that the transfer of the control program saved in the machine controller (20) into the storage device (16) of the newly inserted drive system (9) automatically occurs following a replacement of the drive system (9).

2. Apparatus (1) according to claim 1, **characterised in that** the control program is saved in the machine controller (20) in a data format suitable for the electronic control and/or regulating and/or monitoring device of the drive system (14).

3. Apparatus (1) according to claim 1 or 2, **characterised in that** the transfer of the control program occurs once only prior to commissioning of the drive system (9).

4. Apparatus (1) according to any one of the claims 1 to 3, **characterised in that**, in case of a defect in any part of a drive system (9), this defect is recognised by the electronic control and/or regulating and/or monitoring device (14) and transmitted via the communication interfaces (17) to the machine controller (20) which then displays a corresponding message and identifies the respective drive system (9).

5. Apparatus (1) according to any one of the claims 1 to 4, **characterised in that** a sensor (13) linked with the electronic control and/or regulating and/or monitoring device (14) is provided, said sensor monitoring operating parameters and detecting faults of the drive system (9).

## Revendications

1. Dispositif servant à manipuler des bouteilles, des boîtes ou des récipients similaires comportant au moins un système d'entraînement (9) réalisé de manière interchangeable, sachant
- que le système d'entraînement (9) présente au moins un élément d'entraînement, un dispositif de commande et/ou de réglage et/ou de surveillance (14) électronique ainsi qu'un dispositif de stockage (16) réalisé de manière réinscriptible servant à recevoir un programme de commande pour le dispositif de commande et/ou de réglage et/ou de surveillance (14) électronique,
- qu'une commande machine (20) est prévue, laquelle est disposée au-dessus,
- que des interfaces de communication (17) correspondantes sont respectivement prévues au niveau du système d'entraînement (9) et de la commande machine (20),
- que le dispositif de commande et/ou de réglage et/ou de surveillance (14) électronique est relié au système de bus externe (19) au moyen de l'interface de communication (17) par l'intermédiaire d'un connecteur à fiches (18) et que le système de bus (19) se trouve en liaison non seulement avec les systèmes d'entraînement (9) mais également avec la commande machine (20) disposée au-dessus,
- que le dispositif de stockage (16) est installé de telle manière que le programme de commande peut être transmis au moyen des interfaces de communication (17) de la commande machine (20) dans le dispositif de stockage (16),
**caractérisé en ce que**
- la commande machine (20) appelle, une fois le montage du système d'entraînement (9) achevé, un élément d'identification de version du programme de commande stocké dans l'unité de stockage (16) de l'unité de commande (14) nouvellement mise en oeuvre et
- compare cet élément d'identification de version avec celui du programme de commande qui est enregistré dans sa mémoire (21) et qui est nécessaire pour le fonctionnement correct de la machine, sachant en outre
- que la commande machine (20), dans le cas où l'élément d'identification de version lu du programme de commande stocké dans le dispositif de stockage (16) du système d'entraînement (9) nouvellement mis en oeuvre ne coïncide pas avec l'élément d'identification de version du programme de commande stocké dans la commande machine (20), transmet de manière automatique le programme de commande stocké dans la commande machine (20) au moyen des interfaces de communication (17) dans le dispositif de stockage (16) du système d'entraînement (9) ou
- que la commande machine (20) est installée de telle manière que la transmission du programme de commande stocké dans la commande machine (20) se produit de manière automatique dans le dispositif de stockage (16) du système d'entraînement (9) nouvellement mis en oeuvre après un changement du système d'entraînement (9).

2. Dispositif (1) selon la revendication 1, **caractérisé en ce que** le programme de commande est stocké dans la commande machine (20) dans un format de fichier approprié pour le dispositif de commande et/ou de réglage et/ou de surveillance électronique du système d'entraînement (14).

3. Dispositif (1) selon la revendication 1 ou 2, **caractérisé en ce que** la transmission du programme de commande a lieu une fois avant la mise en service du système d'entraînement (9).

4. Dispositif (1) selon l'une quelconque des revendications 1 à 3, **caractérisé en ce que** dans le cas d'une défaillance dans une partie quelconque d'un système d'entraînement (9), cette défaillance est reconnue par le dispositif de commande et/ou de réglage et/ou de surveillance (14) électronique et est transmise par l'intermédiaire des interfaces de communication (17) à la commande machine (20), laquelle affiche après cela un message correspondant et identifie le système d'entraînement (9) correspondant.

5. Dispositif (1) selon l'une quelconque des revendications 1 à 4, **caractérisé en ce qu'**un capteur (13) servant à surveiller des paramètres de fonctionnement et servant à détecter des dysfonctionnements du système d'entraînement (9) est prévu, lequel est relié au dispositif de commande et/ou de réglage et/ou de surveillance (14) électronique.
